# EUROPEAN PATENT SPECIFICATION

(11) **EP 2 403 199 B1**
(45) Date of publication and mention of the grant of the patent: **14.11.2018**
(21) Application number: 09847504.9
(22) Date of filing: 18.12.2009
(51) Int. Cl.: H04L 29/06, H04M 3/51, H04M 7/00

(54) **SEAT SERVICE MONITORING DEVICE, SEAT SERVICE DEVICE AND SEAT SERVICE MONITORING METHOD**
SITZDIENST-ÜBERWACHUNGSEINRICHTUNG, SITZDIENST-EINRICHTUNG UND SITZDIENST-ÜBERWACHUNGSVERFAHREN
DISPOSITIF DE CONTRÔLE DE SERVICE À LA PLACE, DISPOSITIF DE SERVICE DE SIÈGES ET PROCÉDÉ DE CONTRÔLE DE SERVICE DE SIÈGES

(30) Priority: 20.07.2009 CN 200910089487
(43) Date of publication of application: 04.01.2012
(73) Proprietor: ZTE Corporation, Shenzhen, Guangdong 518057 (CN)
(72) Inventor: WANG, Jingping, Guangdong 518057 (CN)
(74) Representative: Novagraaf Technologies
(86) International application number: PCT/CN2009/075718
(87) International publication number: WO 2011/009269

(56) References cited:
- WO-A1-2008/098408
- CN-A- 101 106 485
- CN-A- 101 227 531
- US-A1- 2005 114 133
- US-A1- 2008 082 669
- US-B1- 6 259 785
- CISCO SYSTEMS: "Unified Contact Center Enterprise Desktop", INTERNET CITATION, 29 October 2008 (2008-10-29), pages 1-48, XP002694500, Retrieved from the Internet: URL:http://web.archive.org/liveweb/http:// www.cisco.com/en/US/docs/voice_ip_comm/cus t_contact/contact_center/ipcc_enterprise/s rnd/7x/c7desktp.pdf [retrieved on 2013-03-25]

## Description

### Field of the Invention

The present invention relates to call center monitoring technology, and in particularly to an apparatus for monitoring agent service, an agent service apparatus as well as a method for monitoring agent service.

### Background of the Invention

Customer service center can be applied in many fields including telecommunications industry, banking industry, insurance industry and newly developing information technology industry and so on. High quality and efficient services can be provided to users by establishing a customer service center.

The call center is a powerful weapon for enterprises to improve its services. It can improve the service quality of enterprises and meet the requirements of the customers, so that the number of users and the business income increase unceasingly, thereby forming a virtuous circle; and simultaneously, it can also reduce the cost, increase the enterprise's direct marketing by call, and reduce intermediate flow and inventory; it can also efficiently improve the internal management system, reduce the number of the levels, optimize the flat-service structure, and improve the work efficiency; and in addition, the call center is used for propagandizing and improving enterprise image, and extending the business impact.

The operator service of call center is served as a kind of service-class commodity. The quality control of the service is very important for enterprises. If the quality control of operator service is not controlled properly, it will reduce the user satisfaction directly, and increase the amount of the user complaints and influences the enterprise image.

To perform the quality control of service, there are two modes in the prior art. One mode is to recording it and then check the record randomly to determine the quality of service; and the other mode is to determine the quality of service by user's marking after the call service is finished.

During implementing embodiments of the present invention, the inventor finds, however, there are at least the following problems in the call quality control in the prior art.

It can be found that, the result of quality of service can be obtained only after the service is finished no matter whether the quality of service is determined by checking the record randomly or by user's marking. With these two modes, it is impossible to perform the correction in time once a quality of service problem occurs in the process of service, thereby reducing the user satisfaction.

The Patents WO2008/098408A1, US 2008/082669A1 and the US 62597851B1 as well as Cisco's Unified Contact Center Enterprise Desktop 7.2 involves the related technologies, however, the above mentioned problem still remains unsolved.

### Summary of the Invention

The objective of the present invention is to provide an apparatus for monitoring agent service, an agent service apparatus as well as a method for monitoring agent service, to monitor the agent service apparatus in real time, so as to improve the quality of service, and to solve the problems that it is impossible to perform the correction in time once a service quality problem occurs in the process of service which will further reduce the user satisfaction.

This object is solved by the subject matter of the independent claims. Preferred embodiments are defined by the dependent claims.

To achieve the above objective, the present invention provides a method for monitoring agent service, comprising:
an apparatus for monitoring agent service generating a monitoring request carrying an agent service apparatus identifier;
the apparatus for monitoring agent service forwarding the monitoring request to an agent service apparatus corresponding to the agent service apparatus identifier;
the apparatus for monitoring agent service receiving steaming media data which is sent by the agent service apparatus and encoded from the media service data, wherein the media service data is the data collected by the agent service apparatus after receiving the monitoring request;
the apparatus for monitoring agent service decoding the streaming media data; and
the apparatus for monitoring agent service presenting the decoded streaming media data.

In the above method for monitoring agent service, the apparatus for monitoring agent service forwards the monitoring request to the agent service apparatus corresponding to the agent service apparatus identifier through a computer telephone interface (CTI) module of a call service system.

To achieve the above objective, the present invention further provides a method for monitoring agent service, comprising:
an agent service apparatus receiving a monitoring request sent by an apparatus for monitoring agent service, wherein the monitoring request is a request carrying an agent service apparatus identifier generated by the apparatus for monitoring agent service when initiating the monitoring; and the agent service apparatus identifier is used for indicating the agent service apparatus;
the agent service apparatus collecting media service data;
the agent service apparatus encoding the collected media service data into streaming media data; and
the agent service apparatus sending the streaming media data to the apparatus for monitoring agent service, wherein the streaming media data is used for the monitoring of the apparatus to monitor in real time.

In the above method for monitoring agent service, the agent service apparatus receives the monitoring request sent by the apparatus for monitoring agent service through a computer telephone interface (CTI) module of a call service system.

To achieve the above objective, the present invention further provides an apparatus for monitoring agent service, comprising:
a monitoring request generating module, configured to generate a monitoring request carrying an agent service apparatus identifier when initiating a monitoring;
a request forwarding module, configured to forward the monitoring request to an agent service apparatus corresponding to the agent service apparatus identifier;
a data receiving module, configured to receive the steaming media data which is sent by the agent service apparatus and encoded from the media service data, wherein the media service data is the data collected by the agent service apparatus after receiving the monitoring request;
a decoding module, configured to decode the streaming media data; and
a presenting module, configured to present the decoded streaming media data.

In the above apparatus for monitoring agent service, the request forwarding module is provided in a computer telephone interface (CTI) module of a call service system.

In the above apparatus for monitoring agent service, the monitoring request further comprises an IP address of the apparatus for monitoring agent service and a port number for receiving the streaming media data, which are used for indicating the agent service apparatus to send the streaming media data to the destination designated by the IP address and the port number.

In the above apparatus for monitoring agent service, the monitoring request further comprises a data type field, which is used for indicating the agent service apparatus to collect the media service data of the type indicated by the data type field.

To achieve the above objective, the present invention further provides an agent service apparatus, comprising:
a request receiving module, configured to receive a monitoring request sent by an apparatus for monitoring agent service wherein the monitoring request is a request carrying an agent service apparatus identifier generated by the apparatus for monitoring agent service when initiating a monitoring; and the agent service apparatus identifier is used for indicating the agent service apparatus;
a collecting module, configured to collect media service data;
a encoding module, configured to encode the collected media service data into streaming media data; and
a sending module, configured to send the streaming media data to the apparatus for monitoring agent service wherein the streaming media data is configured for the apparatus for monitoring agent to monitor in time.

In the above agent service apparatus, the request receiving module receives the monitoring request sent by the apparatus for monitoring agent service through a computer telephone interface (CTI) module of a call service system.

In the above agent service apparatus, the monitoring request comprises an IP address of the apparatus for monitoring agent service and a port number for receiving the streaming media data, and the sending module is configured to send the streaming media data to the destination designated by the IP address and the port number.

In the above agent service apparatus, the monitoring request further comprises a data type field, and the collecting module is used for collecting the media service data of the type indicated by the data type field.

The present invention has the following beneficial effects.

In the present invention, when the monitoring is required, the apparatus for monitoring agent service forwards the monitoring request to the agent service apparatus, and decodes and presents the streaming media data after receiving the streaming media data which is sent by the agent service apparatus and encoded from media service data. It is possible to monitor the service quality of operators in real time via the voice, video and desktop operation of the operators, to find and correct the unqualified actions of the operators during the service process in time, so that it is possible to efficiently avoid the occurrence of the event causing the lower quality of service, thereby improving the user satisfaction.

### Brief Description of the Drawings

Fig. 1 is a flowchart of a method for monitoring agent service at the monitoring side according to an embodiment of the present invention;
Fig. 2 is a flowchart of a method for monitoring agent service at the being-monitored side according to an embodiment of the present invention;
Fig. 3 is a structural schematic diagram of an apparatus for monitoring agent service according to an embodiment of the present invention;
Fig. 4 is a structural schematic diagram of an agent service apparatus according to an embodiment of the present invention; and
Fig. 5 is a schematic diagram of the connection relationship between an apparatus for monitoring agent service and an agent service apparatus according to an embodiment of the present invention.

### Detailed Description of Embodiments

In an apparatus for monitoring seating service, a seating service apparatus as well as a method for monitoring seating service according to the embodiments of the present invention, the apparatus for monitoring agent service forwards a monitoring request to the corresponding agent service apparatus according to the destination address of the monitoring request after receiving the monitoring request. After receiving the monitoring request, the agent service apparatus collects media service data, and after encoding the collected media service data into streaming media data, sends, the streaming media data to the apparatus for monitoring agent service for real-time playing, so that it is possible to monitor the agent service apparatus in real time.

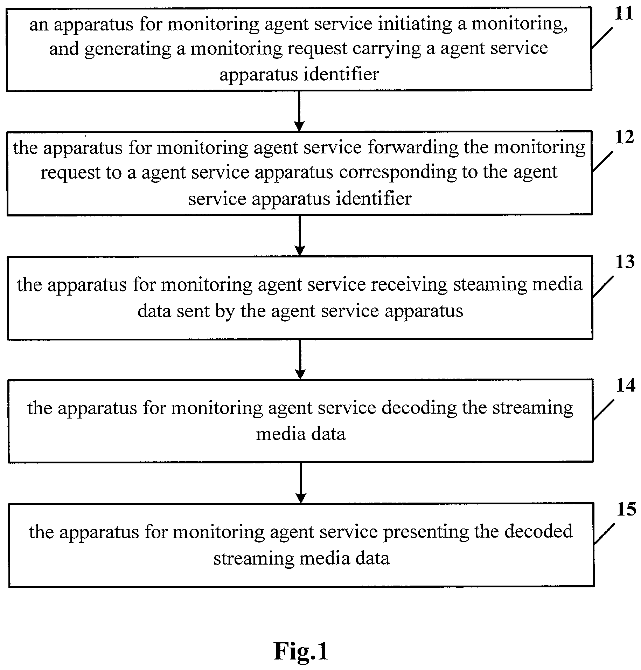

As shown in Fig. 1, at the monitoring side, the method for monitoring agent service according to an embodiment of the present invention comprises the following steps.

Step 11, an apparatus for monitoring agent service initiates a monitoring, and generates a monitoring request carrying an agent service apparatus identifier.

Step 12, the apparatus for monitoring agent service forwards the monitoring request to an agent service apparatus corresponding to the agent service apparatus identifier.

Step 13, the apparatus for monitoring agent service receives the steaming media data which is sent by the agent service apparatus and encoded from the media service data, and the media service data is the data that is collected by the agent service apparatus after receiving the monitoring request.

Step 14, the apparatus for monitoring agent service decodes the streaming media data.

Step 15, the apparatus for monitoring agent service presents the decoded streaming media data.

Certainly, in a detailed embodiment of the present invention, the apparatus for monitoring agent service should open a data receiving port for preparing to receive data flows and decode the data after forwarding the monitoring request to the agent service apparatus corresponding to the agent service apparatus identifier.

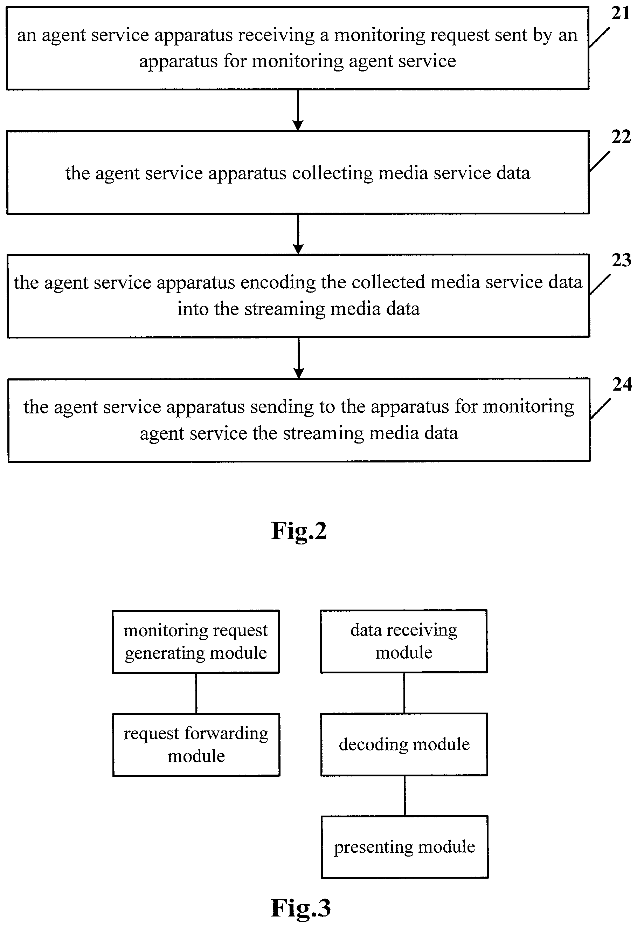

As shown in Fig. 2, at the being-monitored side, the method for monitoring agent service according to an embodiment of the present invention comprises the following steps.

Step 21, an agent service apparatus receives a monitoring request sent by an apparatus for monitoring agent service wherein the monitoring request is a request carrying an agent service apparatus identifier, which generated by the apparatus for monitoring agent service when initiating the monitoring; and the agent service apparatus identifier is used for identifying the agent service apparatus.

Step 22, the agent service apparatus collects media service data.

Step 23, the agent service apparatus encodes the collected media service data into streaming media data.

Step 24, the agent service apparatus sends the streaming media data to the apparatus for monitoring agent service, wherein the streaming media data is used for the apparatus for monitoring agent service to monitor the agent service apparatus in real time.

In a detailed embodiment of the present invention, the above agent service apparatus identifier can be the desk number of the agent service apparatus, the telephone number of the agent service apparatus, or any other parameter capable of identifying an agent service apparatus uniquely, which is not described herein one by one.

It is necessary to generate a monitoring request carrying an agent service apparatus identifier when the apparatus for monitoring agent service initiates the monitoring, which can be implemented by a user interface provided in the apparatus for monitoring agent service; and the user can select an agent service apparatus to be monitored in the user interface and further the monitoring request carrying the agent service apparatus to be monitored can be generated.

The format of a monitoring request should include at least two fields:
a first identifying field, for indicating that the request is a monitoring request; and
a second identifying field, for indicating an agent service apparatus to be monitored.

In the above detailed embodiment, the apparatus for monitoring agent service can receive streaming media data by use of a fixed IP address and a fixed port; therefore it is only necessary for the apparatus for monitoring agent service to send the fixed IP address and the fixed port number to the agent service apparatus, instead of notifying each time the agent service apparatus which IP address and which port it should send the streaming media data to.

Certainly, the apparatus for monitoring agent service can also receive streaming media data without using a fixed IP address and a fixed port; at this point, it is necessary for the apparatus for monitoring agent service to notify the agent service apparatus of the destination address (IP address and port number) of the streaming media data, wherein the destination address can be implemented by adding a third identifying field (identifying the receiving address of the streaming media data, which includes IP address and port number) in the monitoring request. Certainly, the destination address can also be implemented through other messages as long as the being-monitored side is able to decode the message, which is not described herein in detail.

Certainly, in a detailed embodiment of the present invention, the method can further comprise a step for displaying the monitoring state in the apparatus for monitoring agent service. For example, "monitoring start" is displayed in the apparatus for monitoring agent service after step 11; "processing data request" is displayed in the apparatus for monitoring agent service after step 12; "processing data decoding" is displayed in the apparatus for monitoring agent service after step 13; and "under the monitoring" is displayed in the apparatus for monitoring agent service after step 14.

It is convenient for the monitoring side to learn the monitoring state by the real-time display of state.

Certainly, the monitoring can also be terminated arbitrarily in an embodiment of the present invention, and at the monitoring side it comprises:
Step 16, the apparatus for monitoring agent service generates a monitoring stopping request; and
Step 17, the apparatus for monitoring agent service forwards the monitoring stopping request to the agent service apparatus, to instruct the agent service apparatus to stop the collecting, encoding and data sending operations of the media service data.

In a detailed embodiment of the present invention, the media service data can be one or more of the following data:
voice data collected by a sound card;
video data collected by a camera; and
interface operation data of the agent service apparatus collected by a screen data collecting module.

Certainly, the media service data can also be other data as long as it is capable of representing the service quality of the operators, which is not described herein one by one.

In the case that the types of media service data are not determined, the monitoring request can further comprise:
a fourth identifying field, for indicating the type of media service data to be collected.

Step 22, the agent service apparatus collects the media service data of the type indicated by the fourth identifying field.

As shown in Fig. 3, the apparatus for monitoring agent service according to an embodiment of the present invention comprises:
a monitoring request generating module, configured to generate a monitoring request carrying an agent service apparatus identifier when initiating a monitoring;
a request forwarding module, configured to forward the monitoring request to an agent service apparatus corresponding to the agent service apparatus identifier;
a data receiving module, configured to receive the steaming media data which is sent by the agent service apparatus and encoded from the media service data wherein the media service data is the one is collected by the agent service apparatus after receiving the monitoring request;
a decoding module, configured to decode the streaming media data; and
a presenting module, configured to present the decoded streaming media data.

In the case that the port receiving data is not fixed, the monitoring request according to an embodiment of the present invention comprises:
a first identifying field, for indicating the request is a monitoring request; and
a second identifying field, for indicating an agent service apparatus to be monitored.
a third identifying field, for indicating a receiving address of the streaming media data (the address includes a IP address and a port number); and
a fourth identifying field, for indicating the type of the media service data to be collected.

Certainly, the third identifying field is required only in the case that the receiving address is not fixed while the fourth identifying field is required only in the case that the type of media service data to be collected is not fixed.

Certainly, the monitoring request can further comprise a fifth identifying field, for indicating the time length of the monitoring.

In a detailed embodiment of the present invention, the apparatus for monitoring agent service can be set independently, connected with all the agent service apparatuses; and alternatively, the request forwarding module is provided in a computer telephone interface (CTI) module of a call center while other modules are provided in the existing agent service apparatus wherein the CTI module plays the role of a server.

Simultaneously, the monitoring request generating module can be provided to users in the mode of operation interface.

It can be seen in combination with Fig. 3 and the above description that the monitoring request generating module is connected with the request forwarding module; and the data receiving module, the decoding module and the presenting module are connected sequentially. However, the monitoring request generating module and the request forwarding module are not connected with the data receiving module, the decoding module and the presenting module. However it can be understood that there can be connections therebetween, the reason of which is given as follows.

The monitoring request generating module is connected with the data receiving module, the decoding module and the presenting module respectively, which is used for notifying, after generating a monitoring request, the data receiving module to start (including the starting of the data receiving module itself and the starting of the data port) to prepare for receiving data, and notifying the decoding module and the presenting module to start to prepare for decoding and presenting the data.

Certainly, it is also possible that the request forwarding module is connected with the data receiving module, the decoding module and the presenting module respectively, which is used for notifying, after forwarding a monitoring request, the data receiving module to start (including the starting of the data receiving module itself and the starting of the data port) to prepare for receiving data, and notifying the decoding module and the presenting module to start to prepare for decoding and presenting the data.

Certainly, the above notification operation can also be implemented by another independently-set media processing control module. According to commands of the monitoring request generating module or the request forwarding module, the media processing control module notifies the data receiving module to start (including the starting of the data receiving module itself and the starting of the data port) to prepare for receiving data, and notifies the decoding module and the presenting module to start to prepare for decoding and presenting the data.

With the above modes, it can be guaranteed that the data receiving module, the decoding module and the presenting module are started only during the monitoring, which is favorable to the energy conservation.

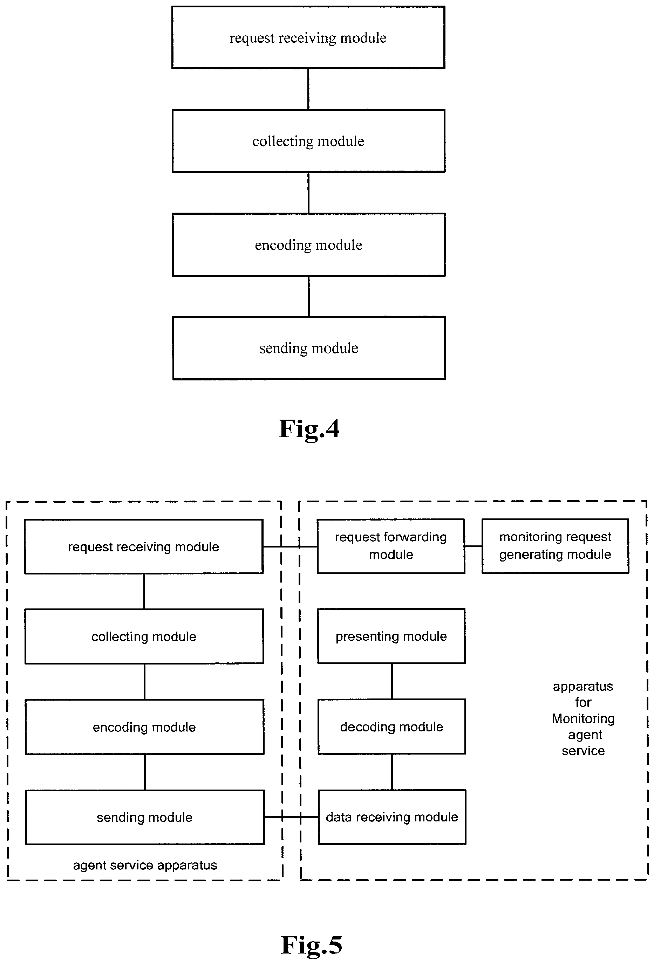

As shown in Fig. 4, the agent service apparatus according to an embodiment of the present invention comprises:
a request receiving module, configured to receive a monitoring request sent by an apparatus for monitoring agent service, wherein the monitoring request is a request carrying a agent service apparatus identifier generated by the apparatus for monitoring agent service when initiating the monitoring; and the agent service apparatus identifier is used for indicating the agent service apparatus;
a collecting module, configured to collect media service data after the receiving module receives the monitoring request;
an encoding module, configured to encode the collected media service data into streaming media data; and
a sending module, configured to send the streaming media data to the apparatus for monitoring agent service, wherein the streaming media data is used for the apparatus for monitoring agent service to monitor the agent service apparatus in real time.

The monitoring request comprises a third identifying field for indicating a receiving address of the streaming media data (the address includes IP address and port number) and a fourth identifying field for indicating the type of media service data to be collected. The collecting module collects the media service data of the type indicated by the fourth identifying field while the sending module sends the streaming media data to the address indicated by the third field.

Certainly, the third identifying field is required only in the case that the receiving address is not fixed while the fourth identifying field is required only in the case that the type of media service data to be collected is not fixed. In the case that these two fields are absent, the collecting module collects the media data of the preset type, while the sending module directly sends data to the preset address (the fixed address and the fixed port of the apparatus for monitoring agent service).

Herein, the agent service apparatus can transmit data and signaling with the apparatus for monitoring agent service by use of various protocols, which is not limited in detailed embodiments of the present invention.

As shown in Fig. 5, it is a schematic diagram illustrating the connection relationship between the apparatus for monitoring agent service and the agent service apparatus according to an embodiment of the present invention.

The method according to an embodiment of the present invention is hereinafter described in detail, in combination with a monitoring side and a being-monitored side, by taking as an example the request forwarding module being provided in the CTI module. The method comprises:
Step 501, after selecting a monitoring function, an operation interface module generates a monitoring request carrying an agent service apparatus identifier A1 (corresponding to agent service apparatus A); and the monitoring request can further comprise an IP address, a data receiving port (e.g. UDP port) and a media service data type of an apparatus for monitoring agent service;
Step 502, after the monitoring request being generated, a control module modifies its own state information (e.g. monitoring start state), and notifies a media data processing module (including a data receiving module, a decoding module and a presenting module) to prepare for receiving, decoding and presenting the data;
Step 503, after receiving the notification, the media data processing module opens a UDP port to prepare for receiving data flows; and if the data flow reception is successful, the media data processing module feeds them back to the request forwarding module and proceeds to the next step; otherwise, it terminates this monitoring;
Step 504, the request forwarding module sends the monitoring request (including an IP address, a receiving data port and the information of data type) to a CTI module;
Step 505, the CTI module parses and obtains the identifier of the agent service apparatus to be monitored according the received monitoring request, finds a corresponding agent service apparatus according to this identifier, and sends a monitoring request to the agent service apparatus;
Step 506, after receiving this monitoring request, the agent service apparatus performs an internal recording, and sends the monitoring request to a media master control sub-unit of the agent service apparatus;
Step 507, the media master control sub-unit of the agent service apparatus parses and obtains the type of media to be monitored (voice, video or screen), and an IP address and a port of the apparatus for monitoring agent service for receiving data, orders the collecting module to collect media data, and notifies the sending module of the destination IP and port for sending the data;
Step 508, the collecting module collects the media service data via a sound card, a video interface and a screen collecting interface;
Step 509, an encoding module encodes the collected data according to the data type (audio, video and screen data);
Step 510, the sending module sends the encoded data to a data receiving module of the apparatus for monitoring agent service in the form of UDP;
Step 511, after receiving media data, the data receiving module of the apparatus for monitoring agent service notifies the media decoding sub-unit;
Step 512, a decoding module decodes the received media data in real time, and sends the decoded data to a presenting module;
Step 513, after receiving these datum, the presenting module presents them respectively according to the different media types; and simultaneously notifies a control module of the apparatus for monitoring agent service that the monitoring has been started; and
Step 514, after receiving this notification, the control module modifies the internal state of the monitoring agent, and notifies an agent interface unit of the apparatus of monitoring agent service that the monitoring is successful.

## Claims

1. A method for monitoring agent service, comprising the steps of:
generating, by an apparatus for monitoring agent service, a monitoring request carrying an agent service apparatus identifier;
forwarding, by the apparatus for monitoring agent service, the monitoring request to an agent service apparatus corresponding to the agent service apparatus identifier;
receiving, by the apparatus for monitoring agent service , streaming media data which is sent by the agent service apparatus and encoded from the media service data, wherein the media service data is the data representing the quality of the agent service and collected by the agent service apparatus after receiving the monitoring request;
decoding, by the apparatus for monitoring agent service, the streaming media data; and
presenting, by the apparatus for monitoring agent service, the decoded streaming media data; wherein the monitoring request further comprises an IP address of the apparatus for monitoring agent service and a port number for receiving the streaming media data, which are used for indicating the agent service apparatus to send the streaming media data to the destination designated by the IP address and the port number;
**characterized in that** the monitoring request further comprises a data type field, which is used for indicating the agent service apparatus to collect the media service data of the type indicated by the data type field, and the data types comprise: voice data of the agent service, video data of the agent service, interface operation data of the agent service apparatus.

2. The method for monitoring agent service according to Claim 1, **characterized in that** the apparatus for monitoring agent service forwards the monitoring request to the agent service apparatus corresponding to the agent service apparatus identifier through a computer telephone interface (CTI) module of a call service system.

3. A method for monitoring agent service, comprising the steps of:
receiving, by an agent service apparatus, a monitoring request sent by an apparatus for monitoring agent service, wherein the monitoring request is a request carrying an agent service apparatus identifier generated by the apparatus for monitoring agent service when initiating the monitoring; and the agent service apparatus identifier is used for indicating the agent service apparatus;
collecting, by the agent service apparatus, media service data which represent the quality of the agent service;
encoding, by the agent service apparatus, the collected media service data into streaming media data; and
sending, by the agent service apparatus, the streaming media data to the apparatus for monitoring agent service so as to monitor the quality of the agent service in real time; wherein the monitoring request further comprises an IP address of the apparatus for monitoring agent service and a port number for receiving the streaming media data, which are used for indicating the agent service apparatus to send the streaming media data to the destination designated by the IP address and the port number;
**characterized in that** the monitoring request further comprises a data type field, which is used for indicating the agent service apparatus to collect the media service data of the type indicated by the data type field, and the data types comprise: voice data of the agent service, video data of the agent service, interface operation data of the agent service apparatus.

4. The method for monitoring agent service according to Claim 3, **characterized in that** the agent service apparatus receives the monitoring request sent by the apparatus for monitoring agent service through a computer telephone interface (CTI) module of a call service system.

5. An apparatus for monitoring agent service, comprising:
a monitoring request generating module, configured to generate a monitoring request carrying an agent service apparatus identifier when initiating a monitoring;
a request forwarding module, configured to forward the monitoring request to an agent service apparatus corresponding to the agent service apparatus identifier;
a data receiving module, configured to receive the streaming media data which is sent by the agent service apparatus and encoded from the media service data, wherein the media service data is the data representing the quality of the agent service and collected by the agent service apparatus after receiving the monitoring request;
a decoding module, configured to decode the streaming media data; and
a presenting module, configured to present the decoded streaming media data;
wherein the monitoring request further comprises an IP address of the apparatus for monitoring agent service and a port number for receiving the streaming media data, which are used for indicating the agent service apparatus to send the streaming media data to the destination designated by the IP address and the port number;
**characterized in that** the monitoring request further comprises a data type field, which is used for indicating the agent service apparatus to collect the media service data of the type indicated by the data type field, and the data types comprise: voice data of the agent service, video data of the agent service, interface operation data of the agent service apparatus.

6. The apparatus for monitoring agent service according to Claim 5, **characterized in that** the request forwarding module is provided in a computer telephone interface (CTI) module of a call service system.

7. An agent service apparatus, comprising:
a request receiving module, configured to receive a monitoring request sent by an apparatus for monitoring agent service wherein the monitoring request is a request carrying an agent service apparatus identifier generated by the apparatus for monitoring agent service when initiating a monitoring; and the agent service apparatus identifier is used for indicating the agent service apparatus;
a collecting module, configured to collect media service data which represent the quality of the agent service;
an encoding module, configured to encode the collected media service data into streaming media data; and
a sending module, configured to send the streaming media data to the apparatus for monitoring agent service so as to monitor the quality of the agent service in time;
wherein the monitoring request further comprises an IP address of the apparatus for monitoring agent service and a port number for receiving the streaming media data, which are used for indicating the agent service apparatus to send the streaming media data to the destination designated by the IP address and the port number; **characterized in that** the monitoring request further comprises a data type field, and the collecting module is used for collecting the media service data of the type indicated by the data type field, and the data types comprise: voice data of the agent service, video data of the agent service, interface operation data of the agent service apparatus.

8. The agent service apparatus according to Claim 7, **characterized in that** the request receiving module receives the monitoring request sent by the apparatus for monitoring agent service through a computer telephone interface (CTI) module of a call service system.

## Patentansprüche

1. Verfahren zum Überwachen eines Agentendienstes, umfassend die Schritte des:
Erzeugens, durch eine Vorrichtung zum Überwachen eines Agentendienstes, einer Überwachungsanfrage, die eine Agentendienstvorrichtungskennung übermittelt;
Weiterleiten, durch die Vorrichtung zum Überwachen eines Agentendienstes, der Überwachungsanfrage an eine Agentendienstvorrichtung, die der Agentendienstvorrichtungskennung entspricht;
Empfangen, durch die Vorrichtung zum Überwachen eines Agentendienstes, von Streamingmediendaten, die von der Agentendienstvorrichtung gesendet und aus den Mediendienstdaten codiert werden, wobei die Mediendienstdaten die Daten sind, die die Qualität des Agentendienstes wiederspiegeln und von der Agentendienstvorrichtung nach Empfangen der Überwachungsanfrage gesammelt werden;
Decodieren, durch die Vorrichtung zum Überwachen eines Agentendienstes, der Streamingmediendaten; und
Darstellen, durch die Vorrichtung zum Überwachen eines Agentendienstes, der decodierten Streamingmediendaten;
wobei die Überwachungsanfrage weiter eine IP-Adresse der Vorrichtung zum Überwachen eines Agentendienstes und eine Portnummer zum Empfangen der Streamingmediendaten umfasst, die dafür verwendet werden, der Agentendienstvorrichtung anzugeben, die Streamingmediendaten an das von der IP-Adresse und der Portnummer benannte Ziel zu senden;
**dadurch gekennzeichnet, dass**
die Überwachungsanfrage weiter ein Datentypfeld umfasst, das dafür verwendet wird, der Agentendienstvorrichtung anzugeben, die Mediendienstdaten des vom Datentypfeld angegebenen Typs zu sammeln, und die Datentypen umfassen: Sprachdaten des Agentendienstes, Videodaten des Agentendienstes, Schnittstellenbetriebsdaten der Agentendienstvorrichtung.

2. Verfahren zum Überwachen eines Agentendienstes nach Anspruch 1, **dadurch gekennzeichnet, dass** die Vorrichtung zum Überwachen eines Agentendienstes die Überwachungsanfrage an die der Agentendienstvorrichtungskennung entsprechende Agentendienstvorrichtung über ein Computertelefonschnittstellen- (CTI) Modul eines Anrufdienstsystems weiterleitet.

3. Verfahren zum Überwachen eines Agentendienstes, umfassend die Schritte des:
Empfangens, durch eine Agentendienstvorrichtung, einer von einer Vorrichtung zum Überwachen eines Agentendienstes gesendeten Überwachungsanfrage, wobei die Überwachungsanfrage eine Anfrage ist, die eine von der Vorrichtung zum Überwachen eines Agentendienstes bei Initiieren der Überwachung erzeugte Agentendienstvorrichtungskennung übermittelt; und die Agentendienstvorrichtungskennung dafür verwendet wird, die Agentendienstvorrichtung anzugeben;
Sammelns, durch die Agentendienstvorrichtung, von Mediendienstdaten, die die Qualität des Agentendienstes wiederspiegeln;
Codierens, durch die Agentendienstvorrichtung, der gesammelten Mediendienstdaten in Streamingmediendaten; und
Sendens, durch die Agentendienstvorrichtung, der Streamingmediendaten an die Vorrichtung zum Überwachen eines Agentendienstes, um die Qualität des Agentendienstes in Echtzeit zu überwachen;
wobei die Überwachungsanfrage weiter eine IP-Adresse der Vorrichtung zum Überwachen eines Agentendienstes und eine Portnummer zum Empfangen der Streamingmediendaten umfasst, die dafür verwendet werden, der Agentendienstvorrichtung anzugeben, die Streamingmediendaten an das von der IP-Adresse und der Portnummer benannte Ziel zu senden;
**dadurch gekennzeichnet, dass**
die Überwachungsanfrage weiter ein Datentypfeld umfasst, das dafür verwendet wird, der Agentendienstvorrichtung anzugeben, die Mediendienstdaten des vom Datentypfeld angegebenen Typs zu sammeln, und die Datentypen umfassen: Sprachdaten des Agentendienstes, Videodaten des Agentendienstes, Schnittstellenbetriebsdaten der Agentendienstvorrichtung.

4. Verfahren zum Überwachen eines Agentendienstes nach Anspruch 3, **dadurch gekennzeichnet, dass** die Agentendienstvorrichtung die von der Vorrichtung zum Überwachen eines Agentendienstes gesendete Überwachungsanfrage über ein Computertelefonschnittstellen- (CTI) Modul eines Anrufdienstsystems empfängt.

5. Vorrichtung zum Überwachen eines Agentendienstes, umfassend:
ein Überwachungsanfrageerzeugungsmodul, das dazu konfiguriert ist, bei Initiieren einer Überwachung eine Überwachungsanfrage zu erzeugen, die eine Agentendienstvorrichtungskennung übermittelt;
ein Anfrageweiterleitungsmodul, das dazu konfiguriert ist, die Überwachungsanfrage an eine der Agentendienstvorrichtungskennung entsprechende Agentendienstvorrichtung weiterzuleiten;
ein Datenempfangsmodul, das dazu konfiguriert ist, die Streamingmediendaten zu empfangen, die von der Agentendienstvorrichtung gesendet und aus den Mediendienstdaten codiert werden, wobei die Mediendienstdaten die Daten sind, die die Qualität des Agentendienstes wiederspiegeln und von der Agentendienstvorrichtung nach Empfangen der Überwachungsanfrage gesammelt werden;
ein Decodiermodul, das dazu konfiguriert ist, die Streamingmediendaten zu decodieren; und
ein Darstellungsmodul, das dazu konfiguriert ist, die decodierten Streamingmediendaten darzustellen;
wobei die Überwachungsanfrage weiter eine IP-Adresse der Vorrichtung zum Überwachen eines Agentendienstes und eine Portnummer zum Empfangen der Streamingmediendaten umfasst, die dafür verwendet werden, der Agentendienstvorrichtung anzugeben, die Streamingmediendaten an das von der IP-Adresse und der Portnummer benannte Ziel zu senden;
**dadurch gekennzeichnet, dass**
die Überwachungsanfrage weiter ein Datentypfeld umfasst, das dafür verwendet wird, der Agentendienstvorrichtung anzugeben, die Mediendienstdaten des vom Datentypfeld angegebenen Typs zu sammeln, und die Datentypen umfassen: Sprachdaten des Agentendienstes, Videodaten des Agentendienstes, Schnittstellenbetriebsdaten der Agentendienstvorrichtung.

6. Vorrichtung zum Überwachen eines Agentendienstes nach Anspruch 5, **dadurch gekennzeichnet, dass** das Anfrageweiterleitungsmodul in einem Computertelefonschnittstellen- (CTI) Modul eines Anrufdienstsystems bereitgestellt ist.

7. Agentendienstvorrichtung, umfassend:
ein Anfrageempfangsmodul, das dazu konfiguriert ist, eine von einer Vorrichtung zum Überwachen eines Agentendienstes gesendete Überwachungsanfrage zu empfangen, wobei die Überwachungsanfrage eine Anfrage ist, die eine von der Vorrichtung zum Überwachen eines Agentendienstes bei Initiieren einer Überwachung erzeugte Agentendienstvorrichtungskennung übermittelt; und die Agentendienstvorrichtungskennung dafür verwendet wird, die Agentendienstvorrichtung anzugeben;
ein Sammelmodul, das dazu konfiguriert ist, Mediendienstdaten zu sammeln, die die Qualität des Agentendienstes wiederspiegeln;
ein Codiermodul, das dazu konfiguriert ist, die gesammelten Mediendienstdaten in Streamingmediendaten zu codieren; und
ein Sendemodul, das dazu konfiguriert ist, die Streamingmediendaten an die Vorrichtung zum Überwachen eines Agentendienstes zu senden, um die Qualität des Agentendienstes in Zeit zu überwachen;
wobei die Überwachungsanfrage weiter eine IP-Adresse der Vorrichtung zum Überwachen eines Agentendienstes und eine Portnummer zum Empfangen der Streamingmediendaten umfasst, die dafür verwendet werden, der Agentendienstvorrichtung anzugeben, die Streamingmediendaten an das von der IP-Adresse und der Portnummer benannte Ziel zu senden;
**dadurch gekennzeichnet, dass**
die Überwachungsanfrage weiter ein Datentypfeld umfasst, und das Sammelmodul dafür verwendet wird, die Mediendienstdaten des vom Datentypfeld angegebenen Typs zu sammeln, und die Datentypen umfassen: Sprachdaten des Agentendienstes, Videodaten des Agentendienstes, Schnittstellenbetriebsdaten der Agentendienstvorrichtung.

8. Agentendienstvorrichtung nach Anspruch 7, **dadurch gekennzeichnet, dass** das Anfrageempfangsmodul die von der Vorrichtung zum Überwachen eines Agentendienstes gesendete Überwachungsanfrage über ein Computertelefonschnittstellen- (CTI) Modul eines Anrufdienstsystems empfängt.

## Revendications

1. Procédé de surveillance de service d'agent, comprenant les étapes suivantes :
la génération, par un dispositif de surveillance de service d'agent, d'une demande de surveillance transportant un identificateur de dispositif de service d'agent ;
le transfert, par le dispositif de surveillance de service d'agent, de la demande de surveillance à un dispositif de service d'agent correspondant à l'identificateur de dispositif de service d'agent ;
la réception, par le dispositif de surveillance de service d'agent, de données multimédias de diffusion en continu qui sont transmises par le dispositif de service d'agent et codées à partir des données de service multimédias, dans lequel les données de service multimédias sont les données représentant la qualité du service d'agent et collectées par le dispositif de service d'agent après la réception de la demande de surveillance ;
le décodage, par le dispositif de surveillance de service d'agent, des données multimédias de diffusion en continu ; et
la présentation, par le dispositif de surveillance de service d'agent, des données multimédias de diffusion en continu décodées ;
dans lequel la demande de surveillance comprend en outre une adresse IP du dispositif de surveillance de service d'agent et un numéro de port pour recevoir les données multimédias de diffusion en continu, qui sont utilisés pour indiquer au dispositif de service d'agent de transmettre les données multimédias de diffusion en continu à la destination désignée par l'adresse IP et le numéro de port ;
**caractérisé en ce que**
la demande de surveillance comprend en outre un champ de type de données, qui est utilisé pour indiquer au dispositif de service d'agent de collecter les données de service multimédias du type indiqué par le champ de type de données, et les types de données comprennent : des données vocales du service d'agent, des données vidéo du service d'agent, des données de fonctionnement d'interface du dispositif de service d'agent.

2. Procédé de surveillance de service d'agent selon la revendication 1, **caractérisé en ce que** le dispositif de surveillance de service d'agent transfère la demande de surveillance au dispositif de service d'agent correspondant à l'identificateur de dispositif de service d'agent à travers un module d'interface ordinateur-téléphone (CTI) d'un système de service d'appels.

3. Procédé de surveillance de service d'agent, comprenant les étapes suivantes :
la réception, par un dispositif de service d'agent, d'une demande de surveillance envoyée par un dispositif de surveillance de service d'agent, dans lequel la demande de surveillance est une demande transportant un identificateur de dispositif de service d'agent généré par le dispositif de surveillance de service d'agent lors du lancement de la surveillance ; et l'identificateur de dispositif de service d'agent est utilisé pour indiquer le dispositif de service d'agent ;
la collecte, par le dispositif de service d'agent, de données de service multimédias qui représentent la qualité du service d'agent ;
le codage, par le dispositif de service d'agent, des données de service multimédias collectées en données multimédia de diffusion en continu ; et
la transmission, par le dispositif de service d'agent, des données multimédia de diffusion en continu au dispositif de surveillance de service d'agent de manière à surveiller la qualité du service d'agent en temps réel ;
dans lequel la demande de surveillance comprend en outre une adresse IP du dispositif de surveillance de service d'agent et un numéro de port pour recevoir les données multimédias de diffusion en continu, qui sont utilisés pour indiquer au dispositif de service d'agent de transmettre les données multimédias de diffusion en continu à la destination désignée par l'adresse IP et le numéro de port ;
**caractérisé en ce que**
la demande de surveillance comprend en outre un champ de type de données, qui est utilisé pour indiquer au dispositif de service d'agent de collecter les données de service multimédias du type indiqué par le champ de type de données, et les types de données comprennent : des données vocales du service d'agent, des données vidéo du service d'agent, des données de fonctionnement d'interface du dispositif de service d'agent.

4. Procédé de surveillance de service d'agent selon la revendication 3, **caractérisé en ce que** le dispositif de service d'agent reçoit la demande de surveillance transmise par le dispositif de surveillance de service d'agent à travers un module d'interface ordinateur-téléphone (CTI) d'un système de service d'appels.

5. Dispositif de surveillance de service d'agent comprenant :
un module de génération de demande de surveillance, configuré pour générer une demande de surveillance transportant un identificateur de dispositif de service d'agent lors du lancement d'une surveillance ;
un module de transfert de demande configuré pour transférer la demande de surveillance à un dispositif de service d'agent correspondant à l'identificateur de dispositif de service d'agent ;
un module de réception de données configuré pour recevoir les données multimédias de diffusion en continu qui sont transmises par le dispositif de service d'agent et codées à partir des données de service multimédias, dans lequel les données de service multimédias sont les données représentant la qualité du service d'agent et collectées par le dispositif de service d'agent après la réception de la demande de surveillance ;
un module de décodage configuré pour décoder les données multimédias de diffusion en continu ; et
un module de présentation configuré pour présenter les données multimédias de diffusion en continu décodées ;
dans lequel la demande de surveillance comprend en outre une adresse IP du dispositif de surveillance de service d'agent et un numéro de port pour recevoir les données multimédias de diffusion en continu, qui sont utilisés pour indiquer au dispositif de service d'agent de transmettre les données multimédias de diffusion en continu à la destination désignée par l'adresse IP et le numéro de port ;
**caractérisé en ce que**
la demande de surveillance comprend en outre un champ de type de données, qui est utilisé pour indiquer au dispositif de service d'agent de collecter les données de service multimédias du type indiqué par le champ de type de données, et les types de données comprennent : des données vocales du service d'agent, des données vidéo du service d'agent, des données de fonctionnement d'interface du dispositif de service d'agent.

6. Dispositif de surveillance de service d'agent selon la revendication 5, **caractérisé en ce que** le module de transfert de demande est disposé dans un module d'interface ordinateur-téléphone (CTI) à un système de service d'appels.

7. Dispositif de service d'agent comprenant :
un module de réception de demande configuré pour recevoir une demande de surveillance envoyée par un dispositif de surveillance de service d'agent, dans lequel la demande de surveillance est une demande transportant un identificateur de dispositif de service d'agent généré par le dispositif de surveillance de service d'agent lors du lancement d'une surveillance ; et l'identificateur de dispositif de service d'agent est utilisé pour indiquer le dispositif de service d'agent ;
un module de collecte configuré pour collecter des données de service multimédias qui représentent la qualité du service d'agent ;
un module de codage configuré pour coder les données de service multimédias collectées en données multimédia de diffusion en continu ; et
un module de transmission configuré pour transmettre les données multimédias de diffusion en continu au dispositif de surveillance de service d'agent de manière à surveiller la qualité du service d'agent en temps réel ;
dans lequel la demande de surveillance comprend en outre une adresse IP du dispositif de surveillance de service d'agent et un numéro de port pour recevoir les données multimédias de diffusion en continu, qui sont utilisés pour indiquer au dispositif de service d'agent de transmettre les données multimédias de diffusion en continu à la destination désignée par l'adresse IP et le numéro de port ;
**caractérisé en ce que**
la demande de surveillance comprend en outre un champ de type de données, et le module de collecte est utilisé pour collecter les données de service multimédias du type indiqué par le champ de type de données, et les types de données comprennent : des données vocales du service d'agent, des données vidéo du service d'agent, des données de fonctionnement d'interface du dispositif de service d'agent.

8. Dispositif de service d'agent selon la revendication 7, **caractérisé en ce que** le module de réception de demande reçoit la demande de surveillance transmise par le dispositif de surveillance de service d'agent à travers un module d'interface ordinateur-téléphone (CTI) d'un système de service d'appels.
